# EUROPÄISCHE PATENTANMELDUNG

(11) **EP 1 059 795 A2**
(43) Veröffentlichungstag der Anmeldung: **13.12.2000**
(21) Anmeldenummer: 00112364.5
(22) Anmeldetag: 09.06.2000
(51) Int. Cl.: H04M 3/42

(54) **Telekommunikations-Vermittlungsanlage**

(30) Priorität: 10.06.1999 DE 19926434
(71) Anmelder: Tenovis GmbH & Co. KG, 60362 Frankfurt (DE)
(72) Erfinder: Wiegand, Nicole, 60326 Frankfurt (DE); Stadler, Stephan, 63150 Heusenstamm (DE)
(74) Vertreter: Friedmann, Jürgen, Dr.-Ing.

(57) **Zusammenfassung**

Eine Telekommunikations-Vermittlungsanlage (1) mit einer Mehrzahl von Anschlüssen (3,4,5,6) für Endgeräte (9) oder Leitungen zu anderen Vermittlungsanlagen (7) und einer Verwaltungseinheit (2), die das Eintreffen eines Anrufs an einem Ruferanschluß (6) erfaßt, den Anruf an einen mit dem Anruf spezifierten ersten Empfängeranschluß (4) signalisiert und gegebenenfalls eine Kommunikationsverbindung zwischen den zwei Anschlüssen (4,6) etabliert, besitzt eine Doppel- oder Mehrfachruffunktionalität, der zufolge sie das Eintreffen eines für den ersten Empfängeranschluß (4) bestimmten Anrufs zeitgleich wenigstens einem den ersten Empfängeranschluß (4) zugeordneten zweiten Empfängeranschluß (5) signalisiert und die Kommunikationsverbindung mit demjenigen der Empfängeranschlüsse (4,5) etabliert, der zuerst seine Bereitschaft meldet, den Anruf entgegenzunehmen.

## Beschreibung

### Stand der Technik

Die vorliegende Erfindung betrifft eine Telekommunikations-Vermittlungsanlage mit einer Mehrzahl von Anschlüssen für Endgeräte und/oder Leitungen zu anderen Vermittlungsanlagen und einer Verwaltungseinheit, die das Eintreffen eines Anrufs an einem der Anschlüsse, als Ruferanschluß bezeichnet, erfaßt, den Anruf einem mit dem Anruf spezifizierten zweiten Anschluß, als erster Empfänger-Anschluß bezeichnet, signalisiert, und gegebenenfalls eine Kommunikationsverbindung zwischen den zwei Anschlüssen etabliert. Derartige Vermittlungsanlagen sind in Öffentlichen Netzen, betriebsinternen Netzen und Privathaushalten allgemein verbreitet.

Manche bekannten Telekommunikationsanlagen verfügen über eine Anrufweiterschaltungsfunktion, die beim Eintreffen eines für einen ersten Empfängeranschluß bestimmten Anrufs diesen Anruf dem Anschluß eine Zeitlang signalisiert, so daß zum Beispiel ein an den Anschluß angeschlossenes Telefon klingelt, und die, wenn der Anruf nach einer bestimmten Zeitspanne nicht entgegengenommen worden ist, die Signalisierung zu dem ersten Anschluß beendet und den Anruf zu einem zweiten Empfängeranschluß umleitet.

Ein Anrufer, der den ersten Empfängeranschluß anwählt, muß deshalb jedesmal, wenn an diesem ersten Anschluß niemand abhebt, die vorgegebene Zeitspanne abwarten, bis die Anrufumleitung zu greifen beginnt und ein an den zweiten Anschluß angeschlossenes Telefon zu läuten beginnt. Wenn diese Zeitspanne zu lang ist, besteht die Gefahr, daß der Anrufer aufhängt, bevor ein Gesprächsteilnehmer am zweiten Empfängeranschluß in der Lage ist, abzuheben. Die vorgegebene Zeitspanne zu verkürzen oder auf Null zu setzen, ist in vielen Fällen unzweckmäßig, da sich auf diese Weise das Problem, daß die zur Verfügung stehende Zeit zu kurz zum Abheben ist, vom zweiten auf den ersten Empfängeranschluß verlagert. Ein Benutzer, der sich abwechselnd in der Nähe der zwei Empfängeranschlüsse aufhält, ist daher gezwungen, mit jedem Standortwechsel die Anrufweiterschaltung zu aktivieren oder zu deaktivieren, um seine Erreichbarkeit sicherzustellen.

### Vorteile der Erfindung

Die erfindungsgemäße Telekommunikations-Vermittlungsanlage gewährleistet die Erreichbarkeit eines Benutzers an verschiedenen Empfängeranschlüssen mit Hilfe einer Doppel- oder Mehrfachruf-Funktion, derzufolge sie das Eintreffen eines für den ersten Empfängeranschluß bestimmten Anrufs zeitgleich wenigstens einen diesem ersten Empfängeranschluß zugeordneten zweiten Empfängeranschluß signalisiert und die Kommunikationsverbindung mit demjenigen der Empfängeranschlüsse etabliert, der zuerst seine Bereitschaft meldet, den Anruf entgegenzunehmen. Ein solches Bereitschaftssignal wird von einem an den Anschluß angeschlossenen Endgerät wie etwa ein Telefon zurückgeliefert, wenn der Benutzer den Hörer des Telefons abnimmt.

Vorzugsweise besitzt die Verwaltungseinheit ein Speicherelement, in das wenigstens zu den Anschlüssen für Endgeräte der Vermittlungsanlage jeweils die Nummer wenigstens eines zugeordneten zweiten Empfängeranschlusses eintragbar ist. Diese Eintragungen können je nachdem, an welchen von unterschiedlichen, an die Vermittlungsanlage angeschlossenen Endgeräten sich ein Benutzer aufhalten will, nach Bedarf eingetragen werden.

Die Eingabe dieser Nummer oder Nummern sollte zweckmäßigerweise nur über den ersten Empfängeranschluß möglich sein, nicht aber beispielsweise über beliebige andere Anschlüsse, so daß nicht ein Benutzer die Möglichkeit hat, für einen zweiten Benutzer bestimmte Anrufe unkontrolliert umzuleiten.

Wenn die Vermittlungsanlage einem Telefon einen Anruf signalisiert, weil es an einen zweiten Empfängeranschluß angeschlossen ist, so besteht die Möglichkeit, daß sich in der Nähe dieses Telefons mehrere Benutzer aufhalten, der Anruf aber nur für einen unter ihnen bestimmt ist, dem der erste Empfängeranschluß gehört. Es ist daher zweckmäßig, wenn die Vermittlungsanlage im Telefon am zweiten Empfängeranschluß signalisiert, daß der Anruf ursprünglich nicht für es bestimmt ist, so daß am angeschlossenen Telefon erkennbar ist - etwa anhand des Läutesignals oder einer optischen Anzeige - , daß das Telefon nur aufgrund der Doppelfunktion läutet. Die optische Anzeige kann zum Beispiel die Nummer des ersten Empfängeranschlusses beinhalten, der vom Anrufer ursprünglich gewählt worden ist. So kann von den mehreren Benutzern sofort der richtige erkennen, daß der Anruf für ihn bestimmt ist und ihn beantworten. Falls dieser richtige Benutzer nicht an Ort und Stelle ist, kann ein anderer Benutzer es auch unterlassen, den Anruf anzunehmen, um es dem richtigen Benutzer zu ermöglichen, den Anruf über einen anderen Empfängeranschluß der Vermittlungsanlage entgegenzunehmen, an dem der Anruf infolge der Doppelfunktion ebenfalls signalisiert wird.

Anders als bei der herkömmlichen Anrufweiterschaltung wird die Nummer des Ruferanschlusses vorzugsweise an beide Empfängeranschlüsse signalisiert, so daß auch ein Benutzer am zweiten Empfängeranschluß gegebenenfalls die Identität eines Anrufers erkennen kann.

Weitere Merkmale und Vorteile der Erfindung ergeben sich aus der nachfolgenden Beschreibung des Ausführungsbeispiels mit Bezug auf die beigefügten Figuren.

### Figuren

Es zeigen
- Figur 1: schematisch ein Telekommunikationsnetz mit einer erfindungsgemäßen Vermittlungsanlage; und
- Figur 2: den zeitlichen Ablauf der Signalisierung in dem Telekommunikationsnetz.

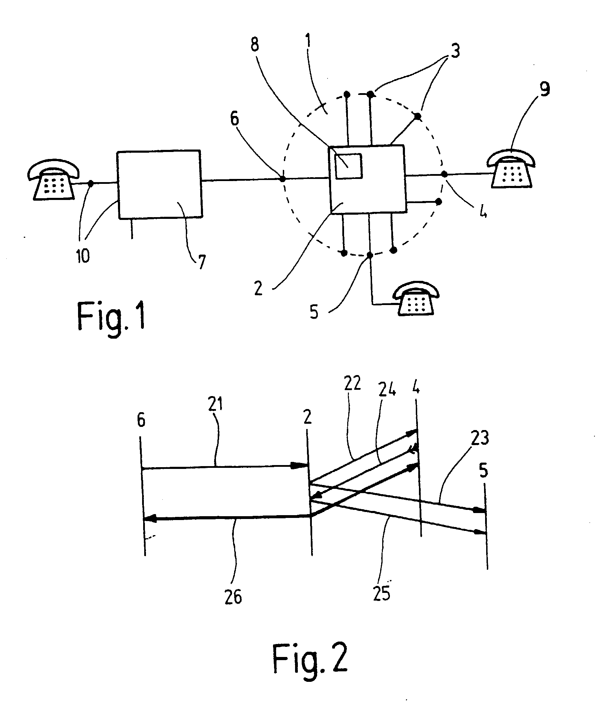

In Figur 1 bezeichnet 1 eine Telekommunikations-Vermittlungsanlage, zum Beispiel eine private Nebenstellenanlage, mit einer Verwaltungseinheit 2 und einer Mehrzahl von Anschlüssen 3,4,5, die zum Beispiel in verschiedenen Räumen eines Gebäudes verteilt sein können. Über wenigstens einen weiteren Anschluß 6 und eine daran angeschlossene Leitung oder Querverbindung ist die Vermittlungsanlage mit einer anderen Vermittlungsanlage, etwa dem öffentlichen Telekommunikationsnetz 7 oder einer zweiten Nebenstellenanlage verbunden.

Die Verwaltungseinheit 2 enthält ein Speicherelement 8, zum Beispiel einen Halbleiterspeicher. Durch Wählen einer Code-Zeichenfolge und einer Rufnummer an seinem Telefon 9 kann ein Benutzer, zum Beispiel der des Anschlusses 4 eine oder mehrere Nummern von anderen Anschlüssen in das Speicherelement 8 eintragen, an denen ein für sein Telefon bestimmter Anruf gleichzeitig signalisiert werden soll. Bei diesen Nummern kann es sich um anlageninterne Nummern von Anschlüssen 3,4,5 handeln; es kann sich aber auch um einen beliebigen, analogen oder digitalen Anschluß 10 des öffentlichen Fernmeldenetzes handeln.

Figur 2 zeigt schematisch den Ablauf der Signalisierung beim Eintreffen eines Anrufs. Dabei wird als Beispiel angenommen, daß der Anruf vom öffentlichen Telekommunikationsnetz 7 über den Anschluß 6 eintrifft. Die Verwaltungseinheit 2 erfaßt den eintreffenden Anruf, symbolisiert durch den Pfeil 21, und extrahiert daraus die Nummer eines ersten Empfängeranschlusses, hier Anschluß 4, der von dem auswärtigen Teilnehmer angewählt worden ist. Anhand des Inhalts des Speicherelements 8 stellt sie fest, daß der Benutzer des Anschlusses 4 den Anschluß 5 als zweiten Empfängeranschluß eingegeben hat. Zeitgleich signalisiert sie daher beiden Anschlüssen den Eingang des Anrufs und die Identität des Ruferanschlusses 10 (Pfeile 22,23)- Dabei können in einer programmgesteuerten Verwaltungseinheit zum Signalisieren des Anrufs an den beiden Anschlüssen 4,5 identische Unterprogramme eingesetzt werden.

Hebt der Benutzer am ersten Empfängeranschluß 4 ab, so empfängt die Verwaltungseinheit hierüber ein Rückmeldungssignal (Pfeil 24) und hebt die Verbindung zum zweiten Empfängeranschluß 5 auf (Pfeil 25). Anschließend wird die Gesprächsverbindung zwischen den Anschlüssen 6 und 4 hergestellt (Pfeil 26).

Auch Anschlüsse an anderen Vermittlungsanlagen als der Vermittlungsanlage 1 selbst können durch die Doppelruffunktion angesprochen werden. Wenn etwa ein Teilnehmer am Anschluß 4 den Anschluß 5 anruft, der Benutzer des Anschlusses 5 aber einen Anschluß 10 am öffentlichen Telekommunikationsnetz in das Speicherelement eingetragen hat, so behandelt die Verwaltungseinheit 2 den Anschluß 6 als zweiten Empfängeranschluß.

Falls ein Benutzer am zweiten Empfängeranschluß 5 zuerst abhebt, so erhält die Verwaltungseinheit 2 auch darüber ein Rückmeldungssignal, woraufhin sie einen Ruftransfer vom Anschluß 4 zu Anschluß 5 durchführt und die Verbindung nach 4 aufhebt. Für den Ruftransfer wie auch die Aufhebung der Verbindung zu dem Anschluß, an dem nicht abgehoben wurde, können mit Hilfe von Unterprogrammen realisiert werden, wie sie bereits für Telekommunikationsanlagen mit einer herkömmlichen Anrufweiterschaltung gebräuchlich sind. Die zusätzliche Funktionalität der erfindungsgemäßen Anlage ist daher mit einem minimalen technischen Aufwand zu erreichen.

Die Doppel- oder Mehrfachruffunktion nach der vorliegenden Erfindung kann jeder beliebige Anrufer nutzen, egal, ob er mit der Vermittlungsanlage 1 an einem der Anschlüsse 3,4,5 oder über ein externes Netz wie das Telekommunikationsnetz 7 verbunden ist, denn für die Nutzung dieser Funktion ist lediglich die Übertragung der Empfängerrufnummer erforderlich. Erster Empfängeranschluß kann zum Beispiel der eines digitalen Teilnehmers, eines Stimulus-Teilnehmers oder eines mobilen Teilnehmers an der Vermittlungsanlage 1 sein. Der oder die zweiten Empfängeranschlüsse können jeweils für einen beliebigen analogen oder digitalen Teilnehmer, als digitale Leitung (ETSI, 1TR6) oder als digitale Querverbindung (QSIG,TNET) zu anderen Vermittlungsanlagen ausgelegt sein.

## Patentansprüche

1. Telekommunikations-vermittlungsanlage mit einer Mehrzahl von Anschlüssen für Endgeräte und/oder Leitungen zu anderen Vermittlungsanlagen und einer Verwaltungseinheit, die das Eintreffen eines Anrufs an einem Ruferanschluß erfaßt, den Anruf an einem mit dem Anruf spezifizierten ersten Empfängeranschluß signalisiert und gegebenenfalls eine Kommunikationsverbindung zwischen den zwei Anschlüssen etabliert, **dadurch gekennzeichnet,** daß die Vermittlungsanlage (1) eingerichtet, das Eintreffen eines für den ersten Empfängeranschluß (4) bestimmten Anrufs zeitgleich wenigstens einem dem ersten Empfängeranschluß (4) zugeordneten zweiten Empfängeranschluß (5) zu signalisieren, und die Kommunikationsverbindung mit demjenigen der Empfängeranschlüsse (4,5) zu etablieren, der zuerst seine Bereitschaft meldet, den Anruf entgegenzunehmen.

2. Telekommunikations-Vermittlungsanlage nach Anspruch 1, **dadurch gekennzeichnet,** daß die Verwaltungseinheit (2) ein Speicherelement (8) aufweist, in das wenigstens zu den Anschlüssen (3,4,5) für Endgeräte (9) jeweils die Nummer eines zugeordneten zweiten Empfängeranschlusses eintragbar ist.

3. Telekommunikations-Vermittlungsanlage nach einem der vorhergehenden Ansprüche, **dadurch gekennzeichnet,** daß die Nummer eines dem ersten Empfängeranschluß (4) zugeordneten zweiten Empfängeranschlusses (5) über den ersten in die Verwaltungseinheit (2) eingebbar ist.

4. Telekommunikations-Vermittlungsanlage nach einem der vorhergehenden Ansprüche**, dadurch gekennzeichnet,** daß die Verwaltungseinheit (2) beim Eintreffen des für den ersten Empfängeranschluß (4) bestimmten Anrufs dem zweiten Empfängeranschluß (5) signalisiert, daß der Anruf nicht für ihn bestimmt ist.

5. Telekommunikations-Vermittlungsanlage nach einem der vorhergehenden Ansprüche, **dadurch gekennzeichnet,** daß die Verwaltungseinheit dem zweiten Empfängeranschluß (5) die Identität des Ruferanschlusses (10) signalisiert.
